# EUROPEAN PATENT SPECIFICATION

(11) **EP 2 768 315 B1**
(45) Date of publication and mention of the grant of the patent: **24.07.2019**
(21) Application number: 12841563.5
(22) Date of filing: 09.10.2012
(51) Int. Cl.: A23G 9/00

(54) **CRYSTALLIZATION RESISTANT FROZEN FOOD PRODUCTS**
KRISTALLISATIONSWIDERSTANDSFÄHIGE GEFRORENE NAHRUNGSMITTEL
PRODUITS ALIMENTAIRES CONGELÉS RÉSISTANT À LA CRISTALLISATION

(30) Priority: 21.10.2011 US 201161550026 P; 24.10.2011 US 201161550698 P
(43) Date of publication of application: 27.08.2014
(73) Proprietor: Corbion Biotech, Inc., South San Francisco, CA 94080 (US); Board of Supervisors of Louisiana State University and Agricultural and Mechanical College, Baton Rouge LA 70803-0106 (US)
(72) Inventor: FINLEY, John, Baton Rouge, LA 70803 (US); SMEESTER-KARPELES, Rachelle, South San Francisco, CA 94080 (US)
(74) Representative: Carpmaels & Ransford LLP
(86) International application number: PCT/US2012/059338
(87) International publication number: WO 2013/059023

(56) References cited:
- EP-B1- 1 545 229
- WO-A1-2004/016094
- WO-A1-2009/000535
- JP-A- 60 221 037
- US-A1- 2010 303 989
- US-A1- 2010 303 989
- US-A1- 2011 256 282
- US-A1- 2011 256 282

## Description

### Technical Field

The present invention relates to methods for reformulating a frozen food product to minimize growth of ice crystals.

### Background

Large ice crystals are often undesirable in frozen foods and can determine the end point of product shelf-life. Growth of ice crystals during production or storage can degrade the mouthfeel of the product. Such concerns are particularly pointed in the production and storage of frozen dessert products such as ice cream, ice milk, frozen yogurt, sherbet, frozen custard or gelato, and highly whipped desserts such as mousse. Ice crystals growth is exacerbated by a high water content of the food, as may be found in ice milk or low-fat ice cream. The size of ice crystals is known to increase over time in frozen storage. The problem is exacerbated when the food is subjected to temperature fluctuations or freeze-thaw cycles. Most commonly, this will occur due to the use of a frost-free freezer or when a storage freezer is repeatedly opened; e.g. by consumers repeatedly entering a freezer display case in a grocery store.

Common strategies employed to combat the formation and growth of ice crystals include rapid freezing, controlled frozen storage, better packaging and the addition of food additives including stabilizers and emulsifiers. Despite these measures, ice crystal formation and growth has remained a major problem in terms of both consumer satisfaction and the economic impact of unusable food products.

US 2011/256282 A1 discloses food compositions comprising algal biomass or algal flour with a high lipid content.

JP 60 221037 A discloses a health ice cream obtained by adding an alga, such as wakame seaweed, laver, sea tangle, chlorella or alga of the genus Spirulina and preferably freeze-drying.

US 2010/303989 discloses food compositions comprising microalgae-derived flour from multiple genera, species and strains of edible microalgae.

### Summary

The present invention provides a method for producing a food product, such as a frozen dessert, in a manner that reduces the formation or growth of large ice crystals. The method includes identifying a candidate frozen food product having a tendency to form large ice crystals and producing a reformulated frozen food product that includes 3-7% of microalgal biomass by weight that is sufficient to inhibit the formation or growth of ice crystals therein. The frozen food product may be a frozen dessert such as an ice cream, low-fat ice cream, light ice cream, ice milk, frozen yogurt, sherbet, frozen custard, gelato, frozen mousse or non-dairy ice cream substitute.

The microalgal biomass may be added in the form of a microalgal flour. The microalgal flour may have an average particle size of from 1 to 100 micrometers.

The microalgal biomass may be derived from cells of a species of *Chlorella* or *Prototheca;* for example *Chlorella protothecoides* or *Prototheca moriformis.*

The microalgal biomass may be produced by culturing microalgae in the dark. The culturing may include adding a fixed carbon source.

The rate of ice crystal growth as measured by the percent change in average ice crystal size may be reduced by at least 5% in the reformulated frozen food product as compared to the candidate frozen food product. The rate of ice crystal growth may be measured by cycling the temperature of the product between -23.3°C (-10°F) and 4.4°C (40°F).

The present invention also provides use of microalgal biomass to reduce the formation or growth of ice crystals in a frozen food product, wherein said microalgal biomass is included in the frozen food product in an amount of 3-7% by weight.

### Brief Description of the Drawings

The foregoing features of the invention will be more readily understood by reference to the following detailed description, taken with reference to the accompanying drawing, in which:

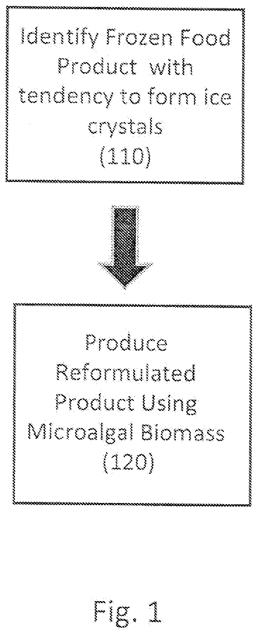

Fig. 1 shows a flow diagram depicting a method of producing a reformulated frozen food product in accordance with the present invention.

### Detailed Description of Embodiments of the Invention

### Definitions

"Biomass" shall mean a material derived from a living organism.
"Frozen food" shall mean a food normally stored below the freezing point of water in the food, thus making it susceptible to loss in value due to ice crystal growth.
A "Frozen dessert" shall mean a frozen food consumed as a dessert, whether naturally or artificially sweetened.
In connection with culturing microalgae, "in the dark" shall mean that the microalgae are grown under substantially heterotrophic conditions as opposed to phototrophic conditions. For example, the microalgae may be shielded from light through containment in an opaque fermentation vessel.
A "microalgal flour" shall mean edible, microalgae biomass formulated into a powder consisting of particles that are small enough to allow the powder to be mixed into a food. Although the microalgal flour may retain some water, it is a dry ingredient, as opposed to a suspension of microalgal cells.
"Overrun" is a measure of the air incorporated into a frozen dessert. Overrun is measured as follows: % Overrun = ((Final volume of the ice cream - Volume of the ice cream mix used)/Volume of the ice cream mix used) x 100.

Illustrative embodiments of the present invention feature a method for reformulating a frozen food product, such as a frozen dessert product, in a manner that reduces the formation or growth of large ice crystals, including those large enough to be noticed by an ordinary consumer, for example via perception by mouthfeel.

The method includes identifying a candidate frozen food product having a tendency to form large ice crystals and producing a reformulated frozen food product that includes an amount of microalgal biomass that is sufficient to inhibit the formation or growth of ice crystals.

Fig. 1 shows a method for reformulating a frozen food product. First, a frozen food product with a tendency to form ice crystals is identified (step 110). For example, the candidate (and reformulated) food product may be a frozen dessert such as an ice cream, low-fat ice cream, ice milk, frozen yogurt, sherbet, frozen custard, gelato or non-dairy ice cream substitute. The frozen food product may be one regulated by 21 CFR § 135. The product may also be a more complex product that includes a frozen dessert product, e.g. an ice cream cake, ice cream sandwich, ice cream novelty or corresponding products made with ice cream substitutes or other frozen dessert products.

The product is then reformulated using microalgal biomass (step 120). The microalgal biomass may be in the form of a microalgal flour. The microalgal flour may be made from microalgal biomass using a spray drying process. See, for example, published U.S. Patent Application 2010/0303989. The flour may comprise intact (unlysed) cells, lysed cells or a combination thereof (e.g. 10% to 90% intact cells or, preferably, 20% to 80% intact cells). The particles that make up the microalgal flour may have a variety of size distributions, but preferably the particles are sized to allow for easy handling of the particles. For example, it may be desirable to have a flowable powder for ease of measurement, dispensing and automation of food processing. In a specific embodiment, the average particle size of the particles is between 2 and 100 micrometers. The reformulated frozen food product includes 3% to 7% of the microalgal biomass by weight. In a preferred embodiment the product includes 4% to 6% biomass, by weight.

The microalgal biomass may be derived from cells of a species of *Chlorella* or *Prototheca;* for example *Chlorella protothecoides or Prototheca moriformis*.

The microalgal biomass may he produced by culturing microalgae in the dark. Culturing in the dark may produce better tasting microalgae. The culturing may include adding a fixed carbon source, such as glucose or sucrose. The fixed carbon source may also include glucose and/or fructose supplemented with glycerol. When sucrose is used as a carbon source, a sucrose invertase may be included.

An ice crystal size of 10 micrometers starts to degrade product quality and ice crystals sizes of 25 micrometers represent an unacceptable product. The mean or median ice crystal size in the frozen dessert product may be less than 25 micrometers or less than 10 micrometers when the product is subjected to the temperature cycling treatment of Example 1. The rate of ice crystal growth as measured by the percent change in average ice crystal size, as measured by microscopy, is inhibited when compared against a control (non-algal containing) frozen dessert. The rate of crystal growth may be reduced by at least 5% in the reformulated frozen food product as compared to the candidate frozen food product. The rate of ice crystal growth may be measured under the temperature cycling conditions of Example 1. The ice crystal size may be measured by microscopy with computer image analysis to assign a circle equivalent diameter (the diameter of the circle that would have the equivalent area as the object when represented as a 2-dimensional image). Preferably, the mean circle equivalent diameter of the ice crystals is less than 25 microns after the temperature cycling regime of Example 1.

Frozen dessert ice crystals are measured using a microscope inside a freezer box at - 23.3°C (-10°F). Thin slices of frozen product arc placed on a microscope slide and ice crystal size can be measured using computer image analysis.

Preferably, two persons or fewer on a tasting panel of 10 people can detect an increase in ice crystals (i.e. an increased perception of ice crystals) in the reformulated product subjected to the freeze thaw cycles of Example 1, as compared to a control product stored at -20°C for an equal time. Preferably, a descriptive analysis sensory panel or an ice cream expert panel cannot detect an increased perception of ice crystals in the reformulated product subject to the freeze-thaw cycling of Example 1, as compared to a control product stored at -20°C for an equal time.

The frozen dessert product with microalgae may exhibit high over-run and excellent ice crystal stability (as discussed above). The overrun may be 50%-75%, 75%-100%, 100%-125%, 125%-150%, 150%-175%, 175%-200% or 200%-225%. The shrinkage of the ice cream (i.e. loss of over-run) may be less than 10%, 5%, or 2% by volume when subjected to the temperature cycling of Example 1.
**Example** 1. Frozen stability testing method.
   1. 0.57 litre (1 pint) of frozen products - test and control - are placed into a cycling or non-cycling freezer.
   2. The initial temperature and holding temperature are set to -23.3°C (-10°F).
   3. The freezer defrost cycle is set to defrost 3 times per day for 21 days with the following settings:
      - Freezer cycle -23.3°C (-10°F) to 4.4°C (40°F);
      - 15 minute hold time at each temperature;
      - Ramp rate 5 minutes.
**Example 2.** The frozen dessert and control, at the end of the 21 days, and optionally each week, are analyzed for one or more of: sensory differences; ice crystal sizes by microscopy; ice crystal mass by gravimetric analysis; and product shrinkage.
**Example 3:** Preparing chocolate ice cream with and without microalgal flour

**Light Ice cream with Microalgal Flour.**

| Ingredient | Source/Type | Percent of Total | Fat percent |
|---|---|---|---|
| Milk, Skim | | 65.23% | 0.16% |
| Sugar | C&H / granulated | 13.00% | |
| Algal flour | | 4.00% | 2.20% |
| Cream | 40% Fat | 7.50% | 3.0% |
| cocoa 11% | Gerken's Russet Plus | 3.50% | 0.39% |
| Corn Syrup | 36DE | 3.00% | |
| NFDM, low heat | spray dried extra grade low heat nonfat dry milk (from Dairy America) | 2.75% | |
| GELSTAR® IC 3548 | FMC (stabilizer and emulsifier blend) | 0.700% | 0.0049 |
| salt | | 0.025% | |
| flavor | | 0.3% | |

**Control Ice Cream (no microalgal flour)**

| Ingredient | Source/Type | Percent of Total | Fat Percent |
|---|---|---|---|
| Milk, Skim | | 62.60% | 0.2% |
| Sugar | C&H / Granulated | 13.00% | |
| Algal flour | | 0.00% | 0.00% |
| Cream | 40% Fat | 13.00% | 5.2% |
| cocoa 11% | Gerken's Russet Plus | 3.50% | 0.39% |
| Corn Syrup | 36DE | 3.00% | |
| NFDM, low heat | spray dried extra grade low heat nonfat dry milk (from Dairy America) | 4.25% | |
| GELSTAR® 1C 3548 | FMC (stabilizer and emulsifier blend) | 0.600% | |
| salt | | 0.050% | |
| flavor | | 0.000% | 0.2% |

1. Mix all ingredients in the following order: algal flour, stabilizer, salt, sugar and cocoa. Set aside.
2. Add corn syrup, skim milk and milk solids. Blend into dry mix. Add cream last.
3. Pasteurize 82.2°C (180°F) for 15 seconds.
4. Homogenize at 82.2°C (180°F)/30 bar using the GEA NiroSoavi Panda Homogenizer. Hold mix in double boiler at 65.6°C (150°F) and run through homogenizer.
5. Refrigerate mix
6. Add flavors
7. Run in ice cream machine (Taylor Company). Target is 30-40% overrun

The described embodiments of the invention are intended to be merely exemplary and numerous variations and modifications will be apparent to those skilled in the art. All such variations and modifications are intended to be within the scope of the present invention, as defined in the appended claims.

## Claims

1. A method for producing a food product, the method comprising:
a) identifying a candidate frozen food product;
b) producing a reformulated frozen food product including 3-7% microalgal biomass by weight, wherein said microalgal biomass is sufficient to inhibit the formation or growth of ice crystals therein.

2. A method according to claim 1, wherein the frozen food product comprises a frozen dessert.

3. A method according to claim 2, wherein the frozen food product comprises one of ice cream, low-fat ice cream, light ice cream, ice milk, frozen yogurt, sherbet, frozen custard, gelato or non-dairy ice cream substitute.

4. A method according to any one of the preceding claims, wherein the microalgal biomass comprises a microalgal flour.

5. A method according to claim 4, wherein the microalgal flour is **characterized by** an average particle size of 1 to 100 micrometers.

6. A method according to claim 4, wherein the microalgal flour comprises lysed cells.

7. A method according to any one of the preceding claims, wherein the reformulated frozen food product comprises 4% to 6% algal biomass by weight.

8. A method according to any one of the preceding claims, wherein the microalgal biomass comprises biomass from the genus *Chlorella* or *Prototheca.*

9. A method according to claim 8, wherein the biomass comprises biomass of *Chlorella protothecoides* or *Prototheca morifirmis.*

10. A method according to any one of the preceding claims, wherein the microalgal biomass is derived from genetically-engineered microalgal cells.

11. A method according to any one of the preceding claims, wherein the microalgal biomass is produced by culturing microalgae in the dark.

12. A method according to claim 11, wherein the culturing includes adding a fixed carbon source.

13. A method according to any one of the preceding claims, wherein the rate of ice crystal growth as measured by the percent change in mean ice crystal circle equivalent diameter is reduced by at least 5% in the reformulated frozen food product as compared to the candidate frozen food product.

14. A method according to any one of the preceding claims, wherein two persons or fewer on a tasting panel of 10 people can detect an increased perception of ice crystals in the reformulated product subjected to freeze thaw cycles wherein the freezer defrost cycle is set to defrost 3 times per day for 21 days with the following settings:
freezer cycle -23.3°C (-10°F) to 4.4°C (40°F); 15 minute hold time at each
temperature; and ramp rate 5 minutes,
as compared to a control product stored at -20°C for an equal time.

15. Use of microalgal biomass to reduce the formation or growth of ice crystals in a frozen food product, wherein said microalgal biomass is included in the frozen food product in an amount of 3-7% by weight.

## Patentansprüche

1. Verfahren zur Herstellung eines Lebensmittelprodukts, wobei das Verfahren umfasst:
a) Identifizieren eines Tiefkühlkostprodukt-Kandidaten;
b) Herstellen eines umformulierten Tiefkühlkostprodukts, das 3 bis 7 Gewichtsprozent Mikroalgenbiomasse enthält, wobei die Mikroalgenbiomasse ausreicht, um darin die Bildung oder das Wachstum von Eiskristallen zu hemmen.

2. Verfahren nach Anspruch 1, wobei das Tiefkühlkostprodukt eine Tiefkühlnachspeise umfasst.

3. Verfahren nach Anspruch 2, wobei das Tiefkühlkostprodukt ein Produkt von Eiscreme, fettarmer Eiscreme, leichter Eiscreme, Milcheis, Tiefkühljoghurt, Sorbet, Tiefkühleiercreme, italienischer Eiscreme oder Nichtmilcheiscremeersatz umfasst.

4. Verfahren nach einem der vorhergehenden Ansprüche, wobei die Mikroalgenbiomasse ein Mikroalgenmehl umfasst.

5. Verfahren nach Anspruch 4, wobei das Mikroalgenmehl durch eine durchschnittliche Teilchengröße von 1 bis 100 Mikrometer gekennzeichnet ist.

6. Verfahren nach Anspruch 4, wobei das Mikroalgenmehl lysierte Zellen umfasst.

7. Verfahren nach einem der vorhergehenden Ansprüche, wobei das umformulierte Tiefkühlkostprodukt 4 bis 60 Gewichtsprozent Algenbiomasse umfasst.

8. Verfahren nach einem der vorhergehenden Ansprüche, wobei die Mikroalgenbiomasse Biomasse aus der Gattung *Chlorella* oder *Prototheca* umfasst.

9. Verfahren nach Anspruch 8, wobei die Biomasse Biomasse aus *Chlorella protothecoides* oder *Prototheca morifirmis* umfasst.

10. Verfahren nach einem der vorhergehenden Ansprüche, wobei die Mikroalgenbiomasse aus gentechnisch veränderten Mikroalgenzellen stammt.

11. Verfahren nach einem der vorhergehenden Ansprüche, wobei die Mikroalgenbiomasse durch Kultivierung von Mikroalgen im Dunkeln erzeugt wird.

12. Verfahren nach Anspruch 11, wobei das Kultivieren das Hinzufügen einer Quelle für fixierten Kohlenstoff umfasst.

13. Verfahren nach einem der vorhergehenden Ansprüche, wobei die Geschwindigkeit des Eiskristallwachstums, gemessen als prozentuale Änderung des mittleren Eiskristall-Kreisäquivalentdurchmessers in dem umformulierten Tiefkühlkostprodukt im Vergleich zu dem Tiefkühlkostprodukt-Kandidaten um mindestens 5% verringert ist.

14. Verfahren nach einem der vorhergehenden Ansprüche, wobei von zwei oder weniger Personen aus einer Verkostungsgruppe von 10 Personen eine erhöhte Wahrnehmung von Eiskristallen in dem umformulierten Produkt, das Gefrier-Auftau-Zyklen unterzogen wurde, festgestellt werden kann, wobei der Gefrier-Abtau-Zyklus so eingestellt ist, dass 21 Tage lang 3 Mal täglich unter den folgenden Einstellungen aufgetaut wird:
Gefrierzyklus -23,3°C (-10°F) bis 4,4°C (40°F); 15 Minuten Haltezeit bei jeder Temperatur; und Anstiegsrate 5 Minuten,
im Vergleich zu einem Kontrollprodukt, das für die gleiche Zeit bei -20°C gelagert wurde.

15. Verwendung von Mikroalgenbiomasse zur Verringerung der Bildung oder des Wachstums von Eiskristallen in einem Tiefkühlkostprodukt, wobei die Mikroalgenbiomasse in dem Tiefkühlkostprodukt in einer Menge von 3 bis 7 Gewichtsprozent enthalten ist.

## Revendications

1. Procédé pour la production d'un produit alimentaire, le procédé comprenant :
a) l'identification d'un produit alimentaire congelé candidat ;
b) la production d'un produit alimentaire congelé reformulé comportant 3-7% en poids de biomasse de microalgue, ladite biomasse de microalgue étant suffisante pour y inhiber la formation ou la croissance de cristaux de glace.

2. Procédé selon la revendication 1, le produit alimentaire congelé comprenant un dessert congelé.

3. Procédé selon la revendication 2, le produit alimentaire congelé comprenant l'un parmi la crème glacée, la crème glacée pauvre en matière grasse, la crème glacée légère, le lait glacé, le yaourt congelé, le sorbet, la crème anglaise congelée, le gelato ou un substitut de crème glacée non laitier.

4. Procédé selon l'une quelconque des revendications précédentes, la biomasse de microalgue comprenant une farine de microalgue.

5. Procédé selon la revendication 4, la farine de microalgue étant **caractérisée par** une grosseur moyenne de particule de 1 jusqu'à 100 micromètres.

6. Procédé selon la revendication 4, la farine de microalgue comprenant des cellules lysées.

7. Procédé selon l'une quelconque des revendications précédentes, le produit alimentaire congelé reformulé comprenant 4% jusqu'à 6% en poids de biomasse d'algue.

8. Procédé selon l'une quelconque des revendications précédentes, la biomasse de microalgue comprenant de la biomasse du genre *Chlorella* ou *Prototheca.*

9. Procédé selon la revendication 8, la biomasse comprenant de la biomasse de *Chlorella protothecoides* ou *Prototheca morifirmis.*

10. Procédé selon l'une quelconque des revendications précédentes, la biomasse de microalgue étant issue de cellules de microalgue génétiquement modifiées.

11. Procédé selon l'une quelconque des revendications précédentes, la biomasse de microalgue étant produite par la culture des microalgues dans l'obscurité.

12. Procédé selon la revendication 11, la culture comportant l'ajout d'une source de carbone déterminée.

13. Procédé selon l'une quelconque des revendications précédentes, la vitesse de croissance des cristaux de glace telle que mesurée par la variation en pourcentage du diamètre équivalent de cercle de cristal de glace moyen étant réduite d'au moins 5% dans le produit alimentaire congelé reformulé, par rapport au produit alimentaire congelé candidat.

14. Procédé selon l'une quelconque des revendications précédentes, deux personnes ou moins d'un jury de dégustation de 10 personnes pouvant détecter une perception accrue de cristaux de glace dans le produit reformulé soumis à des cycles de gel-dégel, le cycle de décongélation du congélateur étant défini pour décongeler 3 fois par jour pendant 21 jours selon les réglages suivants :
cycle de congélation -23,3°C (-10°F) jusqu'à 4,4°C (40°F) ; 15 minutes de temps de maintien à chaque température ; et vitesse de rampe de 5 minutes,
par rapport au produit de contrôle stocké à -20°C pendant un temps égal.

15. Utilisation de biomasse de microalgue pour la réduction de la formation ou de la croissance de cristaux de glace dans un produit alimentaire congelé, ladite biomasse de microalgue étant comprise dans le produit alimentaire congelé en une quantité de 3-7% en poids.
